# EUROPÄISCHE PATENTANMELDUNG

(11) **EP 0 737 955 A1**
(43) Veröffentlichungstag der Anmeldung: **16.10.1996**
(21) Anmeldenummer: 96105024.2
(22) Anmeldetag: 29.03.1996
(51) Int. Cl.: G09F 3/10

(54) **Haftklebe-Etikett**

(30) Priorität: 07.04.1995 DE 29506051 U
(71) Anmelder: PAGO Etikettiersysteme GmbH, 72629 Aichtal (DE)
(72) Erfinder: Lautenschlager, Kurt, 73760 Ostfildern/Ruit (DE)
(74) Vertreter: Riebling, Peter, Dr.-Ing.

(57) **Zusammenfassung**

Ein Haftklebe-Etikett, bestehend aus mindestens einer Lage von Obermaterial, einer Haftklebstoffschicht und einem Trägermaterial, wobei das Obermaterial aus einer hochtransparenten Folie besteht, welche mindestens an ihrer Unterseite mit einer Druckfläche versehen ist.

## Beschreibung

Gegenstand der Neuerung ist ein Haftklebe-Etikett nach dem Oberbegriff des Schutzanspruchs 1. Derartige Haftklebe-Etiketten sind in verschiedenen Ausführungsformen bekannt geworden. Bei allen Ausführungsformen handelt es sich um sogenannte Haftklebe-Etiketten, bei denen die Oberseite des Obermaterials (von oben) mit einem Bedruck versehen wird. Der Druck, der z.B. als Siebdruck, Flexodruck, Buchdruck und dergleichen aufgebracht wird, wurde bisher immer auf die Oberseite des Obermaterials der Etikettenbahn aufgebracht. Damit bestand aber der Nachteil, daß man dieses Druckfeld nach oben hin gegen eine nachfolgende Beschädigung schützen mußte.Hierbei war es bekannt, eine zusätzliche Schutzschicht aufzubringen, die z.B. als Lackierschicht, als Laminatschicht oder als Kaschierschicht aufgebracht war. Damit besteht aber der Nachteil, daß ein zusätzlicher Arbeitsgang und ein zusätzliches Material benötigt wird, um diese Druckfläche gegen nachfolgende Beschädigung zu schützen.

Der Neuerung liegt deshalb die Aufgabe zugrunde, ein Haftklebe-Etikett der eingangs genannten Art so weiterzubilden, daß wesentlich geringere Herstellungskosten bestehen, daß das Haftklebe-Etikett einwandfrei gegen Beschädigung der Druckfläche geschützt ist und daß ein geringerer Materialverbrauch bei der Herstellung derartiger Haftklebe-Etiketten gewährleistet ist.

Zur Lösung der gestellten Aufgabe ist die Neuerung durch die technische Lehre des Anspruchs 1 gekennzeichnet.

Wesentliches Merkmal der Neuerung ist, daß mindestens das Obermaterial aus einer hochtransparenten Folie besteht und daß diese hochtransparente Folie mindestens an der Unterseite mit der Druckfläche versehen ist. Mit der gegebenen technischen Lehre besteht der wesentliche Vorteil, daß der Druck nun einwandfrei gegen Beschädigung von oben her geschützt ist, denn er sitzt bevorzugt auf der Unterseite des Obermaterials und kann deshalb nicht mehr beschädigt werden. Die Oberfläche des Obermaterials selbst dient als Schutzschicht für den an der Unterseite oder Rückseite angebrachten Druck und es bedarf keiner weiteren Veredelungsschichten, Trägerschichten oder Laminatschichten mehr, um diesen Druck vor Beschädigung zu schützen.

Die Druckfläche sitzt hier bevorzugt in der haftklebrigen Ausstattung des Haftklebe-Etikettes, was mit keinerlei Funktionsstörungen verbunden ist.

Es ist nun erstmals möglich, ein derartiges Haftklebe-Etikett wesentlich kostengünstiger herzustellen, denn die vorher erwähnten Veredelungs- oder Abdeckschichten können vollständig entfallen.

Selbstverständlich sieht es die Erfindung vor, daß der Druck nicht nur von der Unterseite des Obermaterials her erfolgt, sondern es kann in einer anderen Ausgestaltung eine Kombination vorgesehen werden, daß der Druck sowohl von oben als auch von unten erfolgt.

Hierbei können unterschiedliche Druckverfahren zum Einsatz kommen. Insbesondere werden folgende Drucksysteme verwendet:

Rotationsbuchdruck, Rotationssiebdruck, Tiefdruck, Flexodruck, Offsetdruck, Laserdruck und farbauftragende Drucke, wie z.B. Tintenstrahldruck und dergleichen mehr.

Hierbei wird es bevorzugt, wenn das Obermaterial als Rollenware von einer Abwicklung abgezogen wird und einem Druckwerk zugeführt wird, welches ggf. auch mehrfarbig druckt. Hierbei ist es wichtig, daß dieser Druck von der Unterseite her erfolgt, wonach dann die weiteren Verarbeitungsschritte zur Herstellung des Haftklebe-Etikettes angeschlossen werden. Es kann dann eine Kleberschicht auf die bedruckte Unterseite des Obermaterials aufgebracht werden, wobei diese Kleberschicht durch verschiedene Klebesysteme aufgebracht werden kann. Hierbei kommen sämtliche bekannten Klebesysteme zum Einsatz.

Insbesondere werden verwendet eine Klebeschicht mit einem Heißschmelzkleber, einem Dispersionskleber, einem Lösungsmittelkleber und einem Sprühkleber.

Hierbei wird es bevorzugt, wenn die genannten Klebesysteme nicht direkt auf die bedruckte Rückseite des Obermaterials aufgebracht werden, sondern ein Transfersystem Anwendung findet. Hierbei wird es bevorzugt, wenn die genannten Klebersysteme auf einer Dehäsivschicht angeordnet sind und diese dann der bedruckten Unterseite des Obermaterials mit dem aufgebrachten Kleber zugeführt wird, um diese beiden Materialien miteinander zu verbinden.

Es bleibt aber eine lösbare Verbindung, die in dem Moment gelöst wird, wo das Etikett gespendet wird, d.h. das Etikett abgelöst wird, um auf ein bestimmtes Produkt appliziert zu werden.

Die Ablösung erfolgt hierbei von einem Trägermaterial, welches an der Unterseite der Dehäsivschicht angeordnet ist.

Die Dehäsivschicht kann hierbei als Lackierungsschicht auf dem Trägermaterial 6 aufgebracht sein. Das so hergestellte Haftklebe-Etikett trägt dann dementsprechend die Haftklebeschicht.

Mit der gegebenen technischen Lehre ergibt sich der wesentliche Vorteil, daß nun auch extrem dünne und ggf. auch hochtransparent ausgebildete Folien verarbeitet werden können.

Dies bedeutet nach der vorliegenden Neuerung, daß als Obermaterial ein zweilagiger Folienverbund verwendet wird, der bevorzugt aus einer Unterfolie und aus einer Oberfolie besteht. Diese Folien können eine Dicke von weniger als 15 my aufweisen, wobei diese Folien bedruckt werden.

Der Druck wird hierbei zwischen den beiden Folien angebracht, wobei mindestens die Oberfolie transparent ausgebildet sein muß.

Der Druck wird hierbei auf die Unterseite der hochtransparent ausgebildeten Oberfolie angebracht oder in einer anderen Ausgestaltung auf die Oberseite der transparent oder nichttransparent ausgebildeten Unterfolie.

Dieses so ausgebildete, zweilagige Obermaterial wird dann mit den gleichen weiteren Schichten verbunden, wie es obenstehend am ersten Ausführungsbeispiel erläutert wurde.

In einer dritten Ausgestaltung der vorliegenden Neuerung ist es vorgesehen, daß auch Etikettenbahnen ohne Trägerband erstellt werden.

Hierbei ist vorgesehen, daß eine transparente Dehäsivschicht an der Oberseite vorhanden ist, die ein bedruckbares Obermaterial nach oben hin abdeckt. Dieses Obermaterial wird entweder frontal von oben bedruckt oder - nach der Lehre der vorliegenden Neuerung - von unten her bedruckt, sofern dieses Obermaterial transparent ausgebildet ist.

An der Unterseite des Obermaterials ist dann eine haftklebrige Ausstattung in Form einer Haftklebeschicht vorhanden.

Um diese Haftklebstoffschicht vor dem Zusammenkleben zu schützen, wird eine derartige Etikettenbahn auf sich selbst aufgewickelt und bildet dann einen Wickel, so daß die jeweilige Haftklebstoffschicht mit der Dehäsivschicht 5 der benachbarten Etikettenbahn in Berührung kommt und von dieser abgedeckt wird.

Der Erfindungsgegenstand der vorliegenden Neuerung ergibt sich nicht nur aus dem Gegenstand der einzelnen Schutzansprüche, sondern auch aus der Kombination der einzelnen Schutzansprüche untereinander.

Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Neuerung anhand von mehrere Ausführungswege darstellenden Zeichnungen näher erläutert. Hierbei gehen aus den Zeichnungen und ihrer Beschreibung weitere erfindungswesentliche Merkmale und Vorteile der Neuerung hervor.

Es zeigen:
- Figur 1:: ein Haftklebe-Etikett in einer ersten Ausgestaltung,
- Figur 2:: ein Haftklebe-Etikett in einer zweiten Ausführungsform,
- Figur 3:: das Haftklebe-Etikett in einer dritten Ausführungsform, teilweise übereinander gewickelt dargestellt.

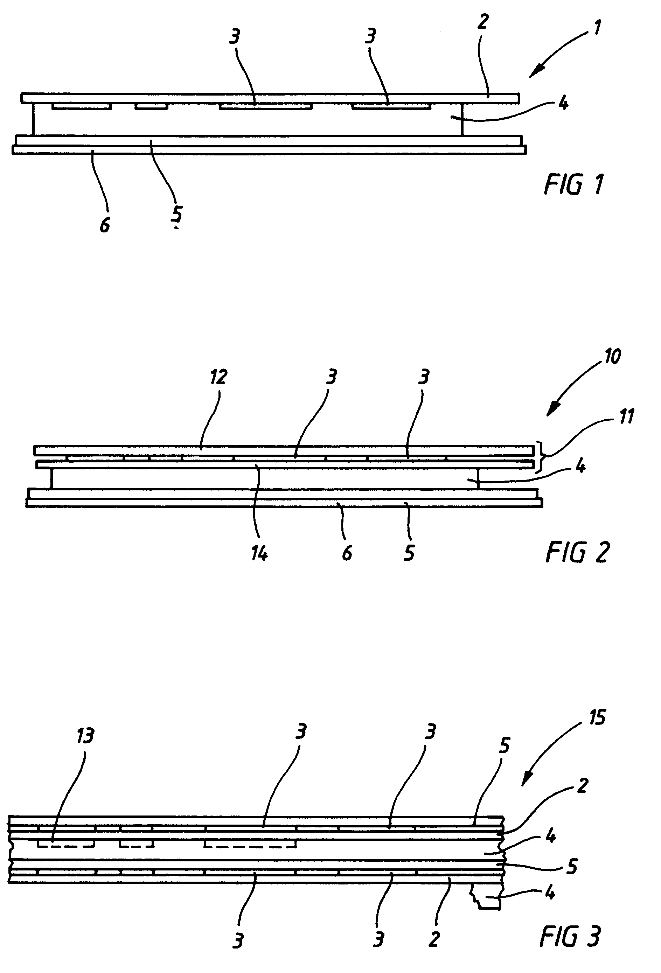

Nach Figur 1 besteht das Haftklebe-Etikett aus einer Etikettenbahn 1, die aus einem Obermaterial 2 besteht, welches neuerungsgemäss von der Unterseite her mit einer Druckfläche 3 bedruckt ist. Voraussetzung hierbei ist, daß das Obermaterial 2 hochtransparent ist. Als Folienmaterial werden Polyolefinfolien, Polyesterfolien, Polystyrole und gleiche Kunststoffmaterialien eingesetzt. Hierbei können Foliendicken bis hinunter von etwa 30 my bedruckt werden.

Die Rückseite des Obermaterials 2, welches den Konterdruck 13 trägt, ist mit einer Haftklebstoffschicht 4 versehen, die auf einer Dehäsivschicht 5 angeordnet ist, die wiederum auf einem Trägermaterial 6 angeordnet ist.

Mit der gegebenen technischen Lehre ergibt sich also der wesentliche Vorteil, daß durch den Bedruck der Rückseite des Obermaterials 2 es nun nicht mehr notwendig ist, auf der Oberseite des Obermaterials 2 entsprechende Schutzschichten anzubringen, um einen dort auf der Oberseite befindlichen Druck vor Beschädigungen zu schützen. Im Ausführungsbeispiel nach Figur 2 gelten die gleichen Bezugszeichen wie in Figur 1. Im Unterschied hierzu ist die Etikettenbahn 10 mit einem doppellagigen Obermaterial 11 ausgestattet.

Dieses Obermaterial 11 besteht aus einer Oberfolie 12 und aus einer Unterfolie 14, wobei wahlweise entweder die Unterseite der Oberfolie 12 mit einer Druckfläche 3 bedruckt werden kann oder auch die Oberseite der Unterfolie 14 mit der gleichen Druckfläche 3 beschichtet wird.

Wichtig ist hierbei, daß extrem dünne Folien mit einer Dicke von z.B. 15 my verwendet werden können und trotzdem ein stabiler Verbund und eine verzugsfreie Etikettenbahn 10 geschaffen wird.

Im übrigen sind an der Unterseite der Unterfolie 14 die in Figur 1 genannten weiteren Schichten vorhanden, nämlich die Haftklebstoffschicht 4 und die Dehäsivschicht 5 sowie das Trägermaterial 6.

Im Ausführungsbeispiel nach Figur 3 ist dargestellt, daß an der Oberseite einer Etikettenbahn 15 eine Dehäsivschicht 5 angeordnet ist, die nach der technischen Lehre der vorliegenden Neuerung von der Rückseite her bedruckt werden kann.

In einer anderen Ausgestaltung ist es vorgesehen, daß das unterhalb der Dehäsivschicht 5 angeordnete Obermaterial 2 an der Oberseite mit einer Druckfläche 3 versehen wird.

Beide Ausführungsformen werden gleichzeitig als neuerungswesentlich beansprucht.

An der Unterseite des Obermaterials 2 ist dann die vorher erwähnte Haftklebstoffschicht 4 angeordnet.

Um mehrere derartiger Haftklebstoffschichten 4 vor gegenseitiger Berührung zu schützen, ist eine derartige Etikettenbahn 15 aufeinander im Wickel aufgewickelt, so daß die benachbarte Etikettenbahn mit ihrer Dehäsivschicht 5 die Haftklebstoffschicht 4 von der Unterseite her abdeckt und schützt.

In der Darstellung der Figur 3 sind also zwei zur gleichen Etikettenbahn gehörende Trägermaterialien auf sich selbst aufgewickelt.

In einer dritten Ausgestaltung der vorliegenden Neuerung ist es vorgesehen, daß die Rückseite des Obermaterials 2 mit einem Konterdruck 13 versehen ist, was voraussetzt, daß sowohl das Obermaterial 2 als auch die Dehäsivschicht transparent ausgestaltet sind.

Ebenso ist es möglich, sowohl die Oberseite des Obermaterials als auch die Unterseite des Obermaterials mit einer entsprechenden Druckfläche zu versehen.

Vorteil der neuerungsgemässen Lehre ist also, daß kostenintensive Veredelungsstufen zum Schutz der Bedruckfläche entfallen können, weil die Bedruckfläche nach der Neuerung so angeordnet ist, daß sie automatisch durch den Druckträger selbst nach oben hin gegen Beschädigung geschützt ist.

Es können demzufolge auch dünne Materialien bedruckt werden, womit der Vorteil besteht, daß eine höhere Anzahl von Etiketten pro Rolle (mit gleichem Rauminhalt) erzeugt werden können.

Ein weiterer Vorteil der neuerungsgemässen Lehre besteht auch darin, daß eine gewisse Opazität 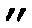 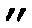 hinter 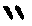 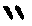 dem Druck erzielt werden kann, wobei die Klebstoffbeschichtung in der Haftklebstoffschicht 4 mit einer entsprechenden Pigmentierung wunschgemäss eingefärbt wird.

Ein weiterer Vorteil der neuerungsgemässen Lösung besteht darin, daß nun die Oberfläche des Obermaterials noch in bestimmter Weise weiterverarbeitet werden kann, was nicht möglich wäre, wenn diese Oberseite durch eine transparente Veredelungsschicht abgedeckt ist.

Eine derartige Weiterverarbeitung wäre z.B. ein Prägen, eine mechanische oder photochemische Behandlung der Oberseite des Obermaterials, eine Teillackierung mit Effektlacken, ein Primen oder dergleichen mehr. Durch den Wegfall der Lackierschicht sind also nicht mehr so hohe Anforderungen an das Material des Obermaterials gestellt, und man ist in der Weiterverarbeitung der Oberseite des Obermaterials freier.

### Zeichnungs-Legende

- 1: Etikettenbahn
- 2: Obermaterial
- 3: Druckfläche
- 4: Haftklebstoffschicht
- 5: Dehäsivschicht
- 6: Trägermaterial
- 7: Unterfolie
- 10: Etikettenbahn
- 11: Obermaterial
- 12: Oberfolie
- 14: Unterfolie
- 15: Etikettenbahn

## Patentansprüche

1. Haftklebe-Etikett, bestehend aus mindestens einer Lage von Obermaterial (2,11), einer Haftklebstoffschicht (4) und einem Trägermaterial (6), **dadurch gekennzeichnet**, daß das Obermaterial (2,11) aus einer hochtransparenten Folie besteht, welche mindestens an ihrer Unterseite mit einer Druckfläche (3) versehen ist.

2. Haftklebe-Etikett nach Anspruch 1, **dadurch gekennzeichnet**, daß zwischen Haftklebstoffschicht (4) und Trägermaterial (6) eine Dehäsionsschicht (5) angeordnet ist.

3. Haftklebe-Etikett nach einem der Ansprüche 1 oder 2, **dadurch gekennzeichnet**, daß das Obermaterial (11) aus einem zweilagigen Folienverbund mit dazwischen liegender Druckfläche (3) besteht.

4. Haftklebe-Etikett nach einem der Ansprüche 1 bis 3, **dadurch gekennzeichnet**, daß das Trägermaterial durch das Obermaterial (2) gebildet ist und auf dem Obermaterial (2) eine Dehäsivschicht (5) aufgebracht ist.

5. Haftklebe-Etikett nach einem der Ansprüche 1 bis 4, **dadurch gekennzeichnet**, daß die Dehäsivschicht (5) transparent ausgebildet ist.
